# EUROPÄISCHE PATENTSCHRIFT

(11) **EP 4 427 919 B1**
(45) Veröffentlichungstag und Bekanntmachung des Hinweises auf die Patenterteilung: **16.04.2025**
(21) Anmeldenummer: 23161239.1
(22) Anmeldetag: 10.03.2023
(51) Int. Cl.: B30B 11/00, G01N 21/359, B30B 15/00, G01N 21/84

(54) **VERFAHREN ZUR STEUERUNG EINER PRESSE ZUM VERPRESSEN EINES TRÄGERMATERIALS MIT MINDESTENS EINER AUF DEM TRÄGERMATERIAL ANGEORDNETEN HARZSCHICHT UND PRODUKTIONSLINIE DAFÜR**
METHOD FOR CONTROLLING A PRESS FOR COMPRESSING A SUPPORT MATERIAL WITH AT LEAST ONE RESIN LAYER ARRANGED ON THE SUPPORT MATERIAL AND ASSOCIATED PRODUCTION LINE
PROCÉDÉ DE COMMANDE D'UNE PRESSE POUR LE PRESSAGE D'UN MATÉRIAU SUPPORT COMPRENANT AU MOINS UNE COUCHE DE RÉSINE DISPOSÉE SUR LE MATÉRIAU SUPPORT ET LIGNE DE PRODUCTION CORRESPONDANTE

(43) Veröffentlichungstag der Anmeldung: 11.09.2024
(73) Patentinhaber: Flooring Technologies Ltd., Kalkara SCM1001 (MT)
(72) Erfinder: HASCH, Joachim, 10317 Berlin (DE); KALWA, Norbert, 32805 Horn-Bad Meinberg (DE)
(74) Vertreter: Maikowski & Ninnemann Patentanwälte Partnerschaft mbB

(56) Entgegenhaltungen:
- EP-A1- 3 885 740
- EP-A1- 4 050 325
- EP-B1- 3 238 934
- GB-A- 2 292 798
- US-A- 5 714 187

## Beschreibung

Die vorliegende Erfindung betrifft ein Verfahren zur Steuerung einer Presse zur Anpassung von Betriebsparametern der Presse, wobei die Presse zum Verpressen eines Trägermaterials mit mindestens einer auf dem Trägermaterial angeordneten Harzschicht geeignet ist.

### Beschreibung

Bei der Herstellung von industriellen "Prepregs" (Imprägnaten, z.B harzimprägnierte Papierlagen) oder von Oberflächenbeschichtungen in der Holzwerkstoffindustrie werden Trägermaterialien mit Harzen imprägniert bzw. beschichtet.

Hierzu können dekorative harzimprägnierte Papiere auf die Oberfläche der Werkstoffplatte aufgepresst werden oder Schichtstoffe, die zunächst aus mehreren harzimprägnierten Papieren zu einem Laminat verpresst werden, auf einen Holzwerkstoff aufgeklebt werden. Auch können Dekore im Direktdruck auf die Holzwerkstoffplatte aufgebracht werden, die anschließend mit einem Harz versiegelt und verpresst werden.

Die zur Imprägnierung von Papierlagen oder auch zur Direktbeschichtung von anderen Trägerplatten verwendeten Harze durchlaufen in diesen Prozessen verschiedene Polymerations- und Vernetzungszustände.

Dies sei im Folgenden anhand des häufig in der Holzwerkstoffplatten-Herstellung zum Einsatz kommenden Melamin-Formaldehyd-Harzes dargestellt.

Melamin und Formaldehyd reagieren zunächst unter Ausbildung von Methylolgruppen an den Aminogruppen des Melamins zu wasserlöslichen Produkten (siehe Schema I).

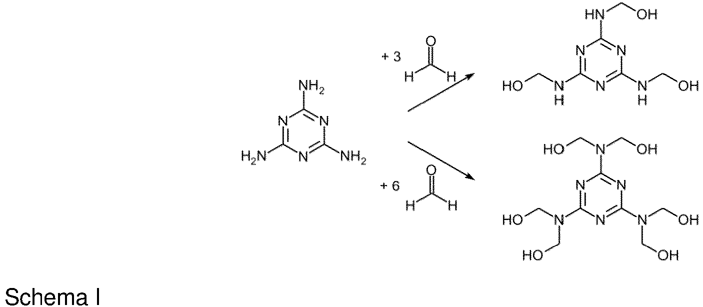

Diese Melamin-Formaldehyd-Monomere unterliegen nach Zugabe eines geeigneten Katalysators, bevorzugt einer Säure, der Polykondensation, wobei es zur Verknüpfung der Monomere über Ether- und Methylengruppen und zur Ausbildung von höhermolekularen Prekondensaten und Polykondensaten kommt (siehe Schema II).

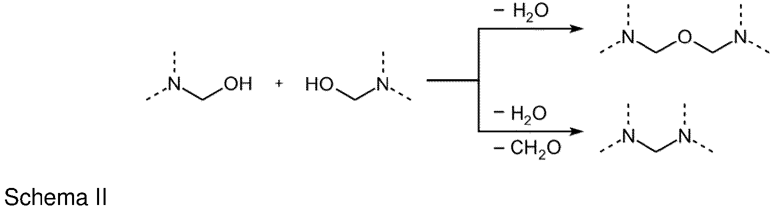

Prekondensate und Polykondensate unterscheiden sich hinsichtlich ihrer Molmasse und ihrer Löslichkeit. So können die niedermolekularen Prekondensate noch über eine begrenzte Wasserlöslichkeit verfügen, während die höhermolekularen Polykondensate unlöslich sind. Die begrenzte Wasserlöslichkeit der Prekondensate ist u.a. durch noch freie Methylolgruppen und den geringen Vernetzungsgrad der meist noch linearen Oligomere bedingt. Die Prekondensate sind somit ein Polymerisationszwischenprodukt.

Bei einer vollständigen Härtung der Polykondensate kommt es zu einer starken Vernetzung unter Abspaltung der noch frei vorhandenen Methylolgruppen als Formaldehyd, wobei sich über Methylengruppen engmaschig vernetzte Kunststoffe ausbilden (siehe Schema III).

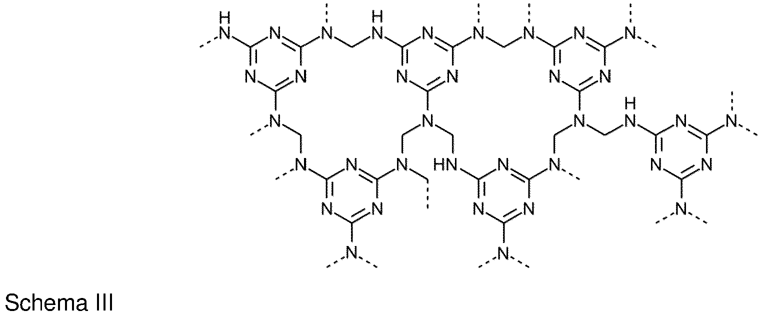

Bei über Kondensationsreaktionen aushärtenden Kunstharzen werden daher folgende Harzzustände unterschieden:
- A-Zustand: leicht in Lösemittel löslich, schmelzbar, härtbar;
- B-Zustand: nur noch teilweise in Lösemittel löslich, schmelzbar, härtbar;
- C-Zustand: unlöslich, ausgehärtet

Bei dem Verpressen (Heißpressen) bewirken Druck und Temperatur die Polykondensationsreaktion, in deren Reaktionsverlauf das Harz, insbesondere Melaminharz aushärtet. Dazu wird das Harz vom Zustand b (teilweise kondensiert, noch schmelzbar und härtbar) in den Zustand c (vollständig kondensiert und ausgehärtet) überführt.

Der Aushärtungsgrad eines Melaminharzes (C-Zustand) und der den Aushärtungsgrad beeinflussende Vernetzungsgrad (B-Zustand) sind dabei ein wichtiges Instrument zur Bestimmung der Oberflächenqualität der Holzwerkstoffprodukte. Eine zu starke Aushärtung führt zu einer Versprödung, die bei weiteren Bearbeitungsschritten (Sägen, Bohren, Fräsen usw.) zu Ausrissen führen kann. Eine zu geringe Aushärtung kann zu schlechten Oberflächeneigenschaften bezüglich der Widerstandsfähigkeit gegenüber Chemikalien und/oder Verschleiß führen. Dies gilt umso mehr, wenn die Wahrscheinlichkeit, dass die Oberfläche einer spezifischen Belastung häufiger ausgesetzt sein wird, größer ist. Als Beispiele seien hier nur eine Arbeitsfläche in einem Labor genannt, die häufiger mit aggressiven Chemikalien in Kontakt kommt oder eine Fußbodenoberfläche, die durch Begehen mechanisch stark belastet wird.

Konventionell wird der Aushärtungsgrad über den sogenannten Säuretest bestimmt. Dabei wird die Oberfläche für einen definierten Zeitraum mit einer verdünnten Mineralsäure (6 molare Salzsäure) beansprucht. Anschließend wird die Glanzgrad- und/oder Farbänderung beurteilt. Dabei ist die Aushärtung umso stärker je weniger Glanzgrad-/Farbverlust zu beobachten ist. Allerdings braucht auch diese Prüfung Zeit, was dazu führt, dass bis zum Vorliegen des Prüfergebnisses nicht qualitätsgerechte Produkte hergestellt werden. So muss zunächst eine Probe aus einer größeren Platte herausgeschnitten werden (Format: bis zu 2800 x 2070 mm). Die Platte, die aus der die Probe herausgeschnitten worden ist, muss wegen des Ausschnittes der zweiten Wahl bzw. dem Ausschuss zugeführt werden. Zudem zeigen sich auch gewisse Abhängigkeiten des Ergebnisses von der Farbe des verwendeten Dekorpapiers oder der Versprödung der Melaminharz-Oberfläche. Dies erschwert die Beurteilung insbesondere bei sehr hellen Dekoren und matten Oberflächenausführungen. Die Prüfung stellt aber lediglich nur eine punktuelle Prüfung dar. Eine verlässliche Aussage über die Aushärtung der gesamten Produktionscharge kann nicht gemacht werden. Zudem ist das Arbeiten mit konzentrierter Salzsäure nicht ungefährlich.

Eine Optimierung der Presszeiten in der Presse kann daher nur sehr langsam vorgenommen werden, da die Prüfung der Muster aus der Produktion incl. der Probenahme nahezu eine Stunde braucht. Dies führt dazu, dass bis ein Ergebnis vorliegt, möglicherweise bereits die Produktionscharge fertig produziert ist.

Die konventionellen Methoden zur Bestimmung des Aushärtungsgrades eines auf einer Werkstoffplatte aufgetragenen Harzes weisen somit eine Reihe von Nachteilen auf. Insbesondere ist es nicht möglich, in kurzer Zeit Betriebsparameter der Presse in Abhängigkeit vom Aushärtungsgrad anzupassen, um optimale Ergebnisse und somit Qualitätssicherheit zu gewährleisten.

EP 3 885 740 A1 offenbart ein Verfahren zur gleichzeitigen Bestimmung von Parametern von mindestens einer auf mindestens einem Trägermaterial aufgetragenen Harzschicht.

Der Erfindung liegt daher die technische Aufgabe zu Grunde, ein Verfahren zu entwickeln, das schnell und wiederholbare Aussagen über die Aushärtung einer auf einer Werkstoffplatte aufgetragenen Polymerschicht, wie einer Melaminharzschicht, ermöglicht und gleichzeitig die Betriebsparameter der Presse zur Beeinflussung von Pressparametern, wie beispielsweise Druck, Temperatur und Presszeit zu steuern.

Diese Aufgabe wird durch ein Verfahren mit den Merkmalen des Anspruchs 1 und eine Produktionslinie mit den Merkmalen des Anspruchs 14 gelöst.

Entsprechend wird ein Verfahren zur Steuerung einer Presse zur Anpassung von Betriebsparametern der Presse bereitgestellt,
wobei die Presse zum Verpressen eines Trägermaterials mit mindestens einer auf dem Trägermaterial angeordneten Harzschicht geeignet ist,
wobei mindestens ein NIR-Multimesskopf in Laufrichtung des zu verpressenden Trägermaterials vor der Presse und mindestens ein NIR-Multimesskopf in Laufrichtung des zu verpressenden Trägermaterials nach der Presse vorgesehen sind;
wobei die NIR-Multimessköpfe mit mindestens einem Steuerungssystem zur Steuerung der Presse mit mindestens einer computergestützten Auswerteeinheit und einer Datenbank zur Prozessierung und ggfs. Speicherung der aufgenommenen und ausgewerteten NIR-Daten verbunden sind,
umfassend die Schritte
- Bestimmen des Vernetzungsgrades der auf dem Trägermaterial angeordneten Harzschicht als mindestens einem ersten Parameter durch Aufnahme von mindestens einem NIR-Spektrum der auf das Trägermaterial aufgetragenen Harzschicht in einem Wellenlängenbereich zwischen 500 nm und 2500 nm, bevorzugt zwischen 700 nm und 2000 nm, insbesondere bevorzugt zwischen 900 nm und 1700 nm und besonders vorteilhaft zwischen 1450 nm und 1550 nm, durch den mindestens einen vor der Presse angeordneten NIR-Multimesskopf, und Auswertung des aufgenommenen NIR-Spektrums in der Auswerteeinheit durch einen automatisierten Vergleich des aufgenommenen NIR-Spektrums mit einem für den Parameter der Harzschicht erstellten Kalibriermodell,
- Bestimmen des Aushärtungsgrades der auf dem Trägermaterial angeordneten Harzschicht als mindestens einem zweiten Parameter der auf dem Trägermaterial angeordneten Harzschicht durch Aufnahme von mindestens einem NIR-Spektrum der auf das Trägermaterial aufgetragenen Harzschicht in einem Wellenlängenbereich zwischen 500 nm und 2500 nm, bevorzugt zwischen 700 nm und 2000 nm, insbesondere bevorzugt zwischen 900 nm und 1700 nm und besonders vorteilhaft zwischen 1450 nm und 1550 nm, durch den mindestens einen nach der Presse angeordneten NIR-Multimesskopf und Auswertung des aufgenommenen NIR-Spektrums in der Auswerteeinheit durch einen automatisierten Vergleich des aufgenommenen NIR-Spektrums mit einem für den Aushärtungsgrad der Harzschicht erstellten Kalibriermodell;

wobei der vor der Presse bestimmte Vernetzungsgrad (Ist-Wert des Vernetzungsgrades) mit einem Soll-Wert des Vernetzungsgrades verglichen wird, und
wobei der nach der Presse bestimmte Aushärungsgrad (Ist-Wert des Aushärtungsgrades) mit einem Soll-Wert des Aushärtungsgrades verglichen wird, und
wobei bei Abweichung des Ist-Wertes des Vernetzungsgrades und/oder bei Abweichung des Ist-Wertes des Aushärtungsgrades von den jeweiligen Soll-Werten die Betriebsparameter der Presse durch das Steuerungssystem automatisch so angepasst werden, dass der Soll-Wert des Vernetzungsgrades und/oder der Soll-Wert des Aushärtungsgrades erfüllt wird.

Es werden somit Parameter der auf ein Trägermaterial aufgetragenen Harzschicht vor dem Verpressen und nach dem Verpressen bestimmt, mit vorgegebenen Soll-Werten verglichen und im Fall eines Abweichens zur Steuerung der Presse verwendet. Die sich ergebenden Differenzen werden anschließend zur Steuerung bzw. Regelung der sich in einer Produktionslinie angeordneten Presse verwendet. Dabei können die Parameter Vernetzungsgrad und Aushärtungsgrad jeweils unabhängig voneinander oder in Kombination zur Steuerung der Presse verwendet werden. Die Betriebsparameter der Presse werden dabei automatisch so angepasst, dass die Soll-Werte erfüllt werden.

Die automatische Rückkopplung der gemessenen Parameter Vernetzungsgrad und/oder Aushärtungsgrad an die Presse ermöglicht eine Verbesserung der Prozesssicherheit und Reduzierung des Ausschusses an mangelhafter Ware. Die unmittelbare Rückmeldung von Abweichungen an die Presse erhöht die Produktionsqualität und dient der Kostensenkung.

Die mittels NIR ermittelte Aushärtung stellt neben anderen Parametern (wie ein brillant sichtbares Dekor, eine geschlossene und optisch störungsfreie Oberfläche, keine Delaminierung von Träger und Beschichtung) einen wichtigen online ermittelten Parameter für die Güte des Laminats dar. Dies umso mehr, da der Aushärtungsgrad nach der Presse nicht ohne weiteres (mit bloßem Auge) erkennbar ist, sondern wie oben beschrieben, erst durch aufwendige Säuretests ermittelt werden muss.

Erfindungsgemäss sind die zu steuernden Betriebsparameter der Presse ausgewählt aus Presstemperatur, Pressdruck und/oder Presszeit, insbesondere Presstemperatur und Presszeit.

So wird der Aushärtungsgrad (C-Zustand) einer Harzschicht insbesondere durch die Presstemperatur und Presszeit bestimmt. Ist die Presszeit zu kurz, kann dies zu einer unzureichenden Aushärtung (Unterhärtung) führen. Ist die Presszeit hingegen zu lang, kann dies zu einer Überhärtung verbunden mit Rissen führen. Die Presstemperatur hat einen ähnlichen Einfluss: Ist die Presstemperatur zu niedrig, kann dies zu einer unzureichenden Aushärtung (Unterhärtung) führen. Ist die Presszeit hingegen zu hoch, kann dies zu einer Überhärtung verbunden mit Rissen führen. Eine fehlerhafte Einstellung des Pressdrucks wiederum, kann zu einem Festkleben des Trägermaterials in der Presse führen.

Der vor der Presse bestimmte Vernetzungsgrad (B-Zustand) hat ebenfalls einen Einfluss auf den Aushärtungsgrad (C-Zustand) und kann damit zur Steuerung der Betriebsparameter der Presse verwendet werden. Sinnvollerweise werden die für den Vernetzungsgrad ermittelten Werte mit den für den Aushärtungsgrad ermittelten Werten abgeglichen, umso die für eine bestimmte Charge an zu verpressenden Trägermaterialien optimalen Pressbedingungen in der Presse einzustellen.

So kann der Vernetzungsgrad von auf Trägermaterialien aufgetragenen und getrockneten Harzschichten variieren, was sich auf die Aushärtung auswirkt. Ist der Vernetzungsgrad vor der Presse z.B. zu hoch, kann dies u. A. zu einer schlechten Haftung des Imprägnats auf dem Trägermaterial führen. Ist der Vernetzungsgrad hingegen zu niedrig, kann dies zu einer Unterhärtung der Harzschicht und somit zu einer zu weichen Oberfläche führen. Eine zu hohe Vernetzung kann z.B. durch eine Übertrocknung bei der Imprägnierung der Papiere oder durch eine unsachgemäße oder zu lange Lagerung von zwischengelagerten harzbeschichteten Trägermaterialien bedingt sein. In diesem Fall läuft die Vernetzung der Harzschicht weiter, so dass es zu einer höheren Vernetzung kommt. In diesem Fall ist es wünschenswert und notwendig die Betriebsparameter der Presse entsprechend anzupassen.

Presszeit und Presstemperatur sind abhängig von der Art des zu verpressenden Trägermaterials, der auf dem Trägermaterial angeordneten Schichten und dem gewünschten Produkt. Im Mittel liegt die Presszeit in einem Bereich zwischen 6 und 40 Sekunden, bevorzugt 8 und 36 Sekunden. Liegt die mit dem Trägermaterial zu verpressende Harzschicht als flüssige Harzschicht (z.B. Flüssigoverlay) vor, beträgt die Presszeit zwischen 6 und 10 Sekunden, bevorzugt 8 und 9 Sekunden. Wird das Trägermaterial mit einem harzhaltigen Papier verpresst, beträgt die Presszeit 12 bis 20 Sekunden, bevorzugt 13 bis 18 Sekunden, insbesondere bevorzugt 14 bis 16 Sekunden, z.B. 15 Sekunden.

Die einzustellende Presstemperatur am Vorlauf der zu steuernden Presse beträgt zwischen 180°C und 220°C, bevorzugt 190°C und 200°C. Die Oberflächentemperatur auf dem Produkt ist ca. um 20°C niedriger als die Vorlauftemperatur und liegt daher zwischen 160°C und 200°C, bevorzugt 180°C und 190°C.

Zu beachten ist, dass die einzustellende bzw. zu steuernde Presszeit und Presstemperatur gegenläufig zueinander sind; d.h. eine Verlängerung der Presszeit ist an eine Reduzierung der Presstemperatur gekoppelt. In einer Ausführungsform bei Verwendung von Kurztaktpressen bedingt eine Verlängerung der Presszeit um 1-2 Sekunden eine Reduzierung der Presstemperatur um 10°C. Im Falle von CPL-Pressen wird der Vorschub entsprechend angepasst. So bewirkt eine Erhöhung des Vorschubs um 1-2 m/min eine Reduzierung der Presstemperatur um 10°C.

### Steuerung der Presse

Wie erwähnt, werden bei Abweichungen von den Soll-Werten die mittels NIR-Spektroskopie ermittelten Parameter für Vernetzung und/oder Aushärtung die Betriebsparameter der Presse so angepasst, dass die Soll-Werte erfüllt werden und die Qualität der Produkte sicher gestellt werden kann.

Für die Steuerung und Anpassung der Ist-Werte and die Soll-Werte werden zunächst Klassen oder Bereiche bestimmt, die den Soll-Werten und Ist-Werten zugeordnet werden.

So werden, wie weiter unten noch im Detail diskutiert, für die Bestimmung des Parameters der Aushärtung zunächst zum Zwecke der Kalibrierung von Referenzproben NIR-Spektren aufgenommen, die anschließend den Ergebnissen eines konventionellen Säuretestes zugeordnet werden. Aus den Ergebnissen des Säuretest für eine Platte wird ein Mittelwert gebildet und dem Spektrum dieser Platte zugeordnet.

Die Ergebnisse des konventionellen Säuretests und der NIR-Messungen werden in 5 Klassen eingeteilt. Tabelle 1 zeigt die entsprechenden Zuordnungen.

**Tabelle 1**

| **Aushärtungsklasse** | **Qualität der Aushärtung** |
|---|---|
| 1 | Überhärtet |
| 2 | leicht überhärtet |
| 3 (Soll-Wert) | optimal ausgehärtet |
| 4 | leicht untergehärtet |
| 5 | Unterhärtet |

Diese Aushärtungsklassen können zur Steuerung der Presse verwendet werden. Werden z.B. in einem laufenden Prozess nach der Presse für ein harzbeschichtetes Trägermaterial mittels NIR-Spektroskopie Parameter ermittelt, die der Aushärtungsklasse 1 entsprechen (und somit vom Soll-Wert abweichen), werden die Betriebsparameter der Presse durch das Steuerungssystem automatisch so angepasst werden, dass der Soll-Wert des Aushärtungsgrades erfüllt wird, wobei der Soll-Wert hier der Aushärtungsklasse 3 entspricht. Dies kann z.B. durch eine Reduzierung der Presstemperatur bewirkt werden.

Für die Bestimmung des Parameters der Vernetzung (B-Zustand) werden ebenfalls zum Zwecke der Kalibrierung von Referenzproben NIR-Spektren aufgenommen, die anschließend den Ergebnissen eines VC (volatile compounds) -Tests zugeordnet werden. Aus den Ergebnissen des VC-Testes für eine Platte wird ein Mittelwert gebildet und dem Spektrum dieser Platte zugeordnet.

Bei der konventionellen VC-Wert Bestimmung wird die Restfeuchte einer Referenzprobe nach Trocknen in einem Ofen bestimmt, wobei neben Wasser auch Formaldehyd (gebildet aus den freien Methylolgruppen) abgespalten wird. Der Anteil an freien Methylolgruppen ist somit ein Faktor zur Bestimmung des Vernetzungsgrades. Die optimale Feuchte (als Summenparameter aus Wasser und Formaldehyd-Freisetzung) von Imprägnaten liegt üblicherweise bei 5 - 7 Gew.% abhängig vom Verwendungszweck. Der Methylolgruppen-Gehalt ist in diesem Fall optimal.

Proben mit einer Feuchte von unter 5 Gew%, z.B. 3-4 Gew%, haben einen Methylolgruppen-Gehalt, der unter dem Optimum liegt und gelten als übertrocknet. Proben mit einer Feuchte von über 7 Gew%, z.B. 8-9 Gew% Feuchte, haben einen Methylolgruppen-Gehalt, der über dem Optimum liegt und gelten als untertrocknet.

Mit diesen Daten kann demnach eine Kalibrierung für die Vernetzung der verschiedenen Harz- und Papiersysteme erfolgen und eine grundsätzliche Voraussage über den Zustand der Vernetzung gemacht werden.

Die Ergebnisse des konventionellen VC-Testes und der NIR-Messungen werden ebenfalls in 5 Klassen eingeteilt. Tabelle 2 zeigt die entsprechenden Zuordnungen.

**Tabelle 2**

| **Vernetzungsklasse** | **Feuchte (Gew%)** | **Qualität der Vernetzung** |
|---|---|---|
| 1 | 3 | Übertrocknet |
| 2 | 4 | leicht übertrocknet |
| 3 | 5-7 Gew% (Soll-Wert) | optimal getrocknet |
| 4 | 8 | leicht untertrocknet |
| 5 | 9 | Untertrocknet |

Die Vernetzungsklassen können zur Steuerung der Presse verwendet werden. Werden z.B. in einem laufenden Prozess vor der Presse für ein harzbeschichtetes Trägermaterial mittels NIR-Spektroskopie Parameter ermittelt, die der Vernetzungsklasse 5 entsprechen (und somit vom Soll-Wert abweichen), werden die Betriebsparameter der Presse durch das Steuerungssystem automatisch so angepasst werden, dass der Soll-Wert des Vernetzungsgrades erfüllt wird, wobei der Soll-Wert hier der Vernetzungsklasse 3 entspricht. Dies kann z.B. durch eine Erhöhung der Presstemperatur und/oder der Presszeit bewirkt werden.

Zu beachten ist, dass in einem Imprägnat ein Teil des Wassers als freies Wasser vorliegt und ein Teil als chemisch gebundenes Wasser. Bei einem gerade hergestellten (frischem) Imprägnat sind ca. 60-70% des Wassers chemisch in den Methylolgruppen gebunden und 20 - 30% freies Wasser. Beim überlagerten Imprägnat sind hingegen >70% freies Wasser und ca. 30% chemisch gebundenes Wasser. Dieser Unterschied beruht auf der langsam stattfindenden Weiterreaktion der Harze im Imprägnat. Diese Reaktion ist säurekatalysiert und läuft selbst bei Raumtemperatur ab. Es ist daher möglich, den Grad der Überlagerung eines Imprägnates durch das Verhältnis von Wasserpeak zu Methylolgruppen-Peak im NIR-Spektrum zu bestimmen.

So kann der Verwendung des VC-Wertes zur Erstellung eines Kalibriermodells, auch - zusätzlich oder ausschließlich - das Verhältnis von Wasserpeak bei 1950 nm und Methylolpeak bei 2050 nm (erste Oberschwingung) im gemessenem NIR - Spektrum zur Bestimmung des Vernetzungsgrades einer Harzschicht herangezogen werden. Die Bestimmung dieses Verhältnisses als Maß für den Vernetzungsgrad ist insbesondere bei Verwendung von überlagerten Imprägnaten vorteilhaft

Diese Angaben über das Verhältnis von Wasserpeak zu Methylolgruppen-Peak können also nach Kalibrierung für die verschiedenen Harz- und Papiersysteme ebenfalls zur grundsätzlichen Voraussage über den Zustand der Vernetzung und zur Steuerung der Presse herangezogen werden.

### Weitere Parameter der Harzschicht

Neben Vernetzungsgrad und Aushärtungsgrad können weitere Parameter der Harzschicht bestimmt werden.

In einer Ausführungsform des vorliegenden Verfahrens werden zusätzlich zum Vernetzungsgrad folgende Parameter, insbesondere mittels NIR-Spektroskopie, vor der Presse bestimmt: Feuchtegehalt der aufgetragenen Harzschicht (siehe EP 2 808 636 B1) und Menge der aufgetragenen Harzschicht (EP 3 428 619 B1).

Diese zusätzlich vor der Presse bestimmten Parameter ermöglichen weitere Angaben zur Qualität der auf dem Trägermaterial aufgebrachten Harzschicht und dienen somit der Qualitätssicherung. In einer Ausführungsform ist vorgesehen, dass diese weiteren Parameter nicht zur Steuerung der Presse verwendet werden, sondern vielmehr dem Bedienpersonal im Herstellungsprozess zur Qualitätskontrolle angezeigt werden (z.B. Grünes Licht - optimale Werte; rotes Licht - mangelhafte Werte). So ist es möglich, Angaben über fehlerhafte Werte der auf das Trägermaterial aufgetragenen Harzschichten rechtzeitig im Fertigungsprozess zu erkennen.

Weist die Harzschicht vor dem Verpressen eine zu niedrige Feuchte auf, bedingt dies einen schlechten Fluss der Harzschicht, schlechte Transparenz und/oder, schlechte Haftung bei Verwendung von Imprägnate. Bei einer zu hohen Feuchte ist die Oberflächenqualität ungünstig beeinflusst. Nicht-optimale Feuchtigkeitsgrade der Harzschicht können in der Presse durch Anpassung der Betriebsparameter ausgeglichen werden. So kann bei einer zu hohen Feuchte die Presstemperatur und parallel der Pressdruck in der Presse erhöht werden. Insbesondere sollte der Druck auf Werte eingestellt werden, die oberhalb des Wasserdampfdruckes liegen. Allerdings ist dies nur in einem bestimmten Rahmen möglich.

Die Menge der aufgetragenen Harzschicht kann sich ebenfalls auf die Oberflächenqualität der verpressten und ausgehärteten Harzschicht auswirken. Weicht die aufgetragene Harzmenge von der optimalen Auftragsmenge nach oben ab (ist also zu hoch), kann die ausgehärtete Harzschicht einen grauen, milchigen Schleier aufweisen. Ist die aufgetragene Harzmenge zu gering kann dies zu einer schadhaften Oberfläche, Delaminierung und schlechten Haftung führen.

In einer weiteren Ausführungsform des vorliegenden Verfahrens wird zusätzlich zum Aushärtungsgrad der folgende Parameter, insbesondere mittels NIR-Spektroskopie, nach der Presse bestimmt: Harzpenetration (bzw. Penetrationshöhe / Penetrationsmenge des Harzes) in mindestens ein auf dem harzbeschichteten Trägermaterial angeordnetem porösen Beschichtungsmaterial.

Dieser weitere nach der Presse bestimmte Parameter ermöglicht ebenfalls weitere Angaben zur Qualität von Produkten, wie z.B. Bodenbelägen, die mit einem porösen Beschichtungsmaterial, insbesondere Furnierlagen, veredelt werden. Hierbei wird das poröse Beschichtungsmaterial vor der Presse auf eine mit einer Harzschicht versehenen Trägermaterial, insbesondere eine Trägerplatte, aufgelegt und anschließend in der Presse verpresst. Während des Pressvorganges penetriert bzw. steigt das Harz in das mindestens eine poröse Beschichtungsmaterial auf. Der Grad der Harzpenetration in das poröse Beschichtungsmaterial als Qualitätsmerkmal kann mittels NIR-Spektroskopie vermessen werden (siehe WO 2022/179883 A1).

Weicht die Harzpenetration in die poröse Beschichtung ab, können die Betriebsparameter der Presse, insbesondere Presstemperatur und/oder Presszeit angepasst werden. Auch hier erfolgt eine gegenläufige Veränderung der genannten Parameter. Bei einer Reduktion der Presstemperatur wird die Presszeit verlängert. Beispielsweise wird bei einer Reduzierung der Presstemperatur um 10°C die Presszeit um 10 bis 20 Sekunden verlängert.

### Presse

Die in dem vorliegenden Verfahren zu steuernde Presse ist eine Kurztaktpresse (KT-Presse) oder eine kontinuierliche Presse.

Kurztaktpressen (KT-Pressen) dienen zur Veredelung der Oberflächen von Platten aus Holzwerkstoffen. KT-Pressen sind besonders zum Verpressen von Spanplatten- und MDF/HDF mit darauf aufgebrachten flüssigen Harzschichten oder harzimprägnierten Papieren geeignet. So werden die Harzschichten dauerfest auf die Oberflächen von Holzwerkstoffplatten aufgebracht. Das Harz dringt dabei einerseits in die Poren der Oberfläche ein und sorgt so für die Haftung. Auf der anderen Seite schafft es eine Oberfläche, die unempfindlich gegenüber diversen Umwelteinflüssen ist.

Kontinuierliche Pressen (CPL Presse) dienen dem Verpressen von Imprägnaten im Durchlauf- oder Endlosverfahren. Eine kontinuierlich arbeitende Presse weist beheizte Rollenbandpresse auf.

Der Pressschritt in der Presse (CPL- Presse) wird bei einem angelegten Pressdruck zwischen 50 - 70 kg/cm² und einer Temperatur zwischen 150 und 200°C, bevorzugt 180°C, durchgeführt. Die Anlagengeschwindigkeit der Pressanlage ist 5-20 m/min, bevorzugt 5 bis 15 m/min, z.B 9,5 m/min. Die Presszone bei einer CPL-Presse hat typischerweise eine Länge von 3000 - 4000 mm. Damit kann man bei bekanntem Vorschub die Presszeit bestimmen. 10 m/min entsprechen bei 3 m Länge somit einer Presszeit von 18 sec.

### Harzschicht

In einer Ausführungsform des vorliegenden Verfahrens umfasst die mindestens eine auf en Trägermaterial aufgebrachte Harzschicht eine harzgetränkte Papierlage, ein harzhaltiges Pulver oder eine harzhaltige Flüssigkeit. Die aufgetragene Harzschicht kann demnach als Pulver- oder Flüssigoverlay oder als Teil- oder Vollimprägnat einer Papierlage auf dem Trägermaterial vorliegen.

### Harzgetränkte Papierlage (Overlay)

Die harzgetränkte Papierlage basiert typischerweise auf einer zellulosehaltigen Lage mit einem durchschnittlichen Blattgewicht von 18-50 g/m², bevorzugt 20-30 g/m², z.B. 25 g/m².

Die Papierlagen sind mit duroplastischen Harzen als Bindemittel imprägniert, wie zum Beispiel Formaldehydharze, insbesondere Melaminharz, Phenolharz, Harnstoffharz oder Mischungen dieser Harze. Solche Papierlagen sind auch als Overlay bekannt.

Zur Imprägnierung der Papierlagen werden wässrige Harzlösungen mit einem Harzfeststoffgehalt zwischen 40 und 80 Gew%, bevorzugt zwischen 50 und 65 Gew% eingesetzt.

Das Harz wird in einer Menge von 200 % bis 600%, bevorzugt 250 % bis 400 % Feststoffgehalt bezogen auf das Flächengewicht der Papierlage aufgebracht. Das Harz wird dabei in einer Menge eingesetzt, die die ausreichend ist, so dass das Harz das poröse Beschichtungsmaterial während des Pressvorganges mindestens abschnittsweise durchdringen kann.

Nach dem Aufbringen des Harzes auf die Papierlage, insbesondere nach dem Imprägnieren der Papierlage mit dem Harz, ist die Oberfläche lediglich vorgetrocknet und somit noch klebrig. Dieser klebrige Zustand wird bei einem Gehalt an flüchtigen Substanzen mit einer Restfeuchte (VC-Wert) von 10-15 % erreicht. Der VC-Wert wird als Differenz zwischen Ausgangsgewicht und Endgewicht nach Trocknen bei 105 °C bis zur Gewichtskonstanz bestimmt.

Die klebrige Oberfläche der harzgetränkten Papierlage vereinfacht das Aufbringen von Additiven zur weiteren Veredelung des porösen Beschichtungsmaterials, wie z.B. einer Furnierlage.

In einer Ausführungsform werden als Papierlagen Overlaypapiere verwendet. Overlaypapiere sind dünne Papiere, welche typischerweise bereits mit einem konventionellen Melamin-Formaldehyd-Harz getränkt wurden Es sind ebenfalls Overlaypapiere erhältlich, in denen bereits abriebfeste Partikel, wie zum Beispiel Korundpartikel in das Harz des Overlays eingemischt sind oder auf das mit Harz benetzte Overlay aufgestreut, um die Abriebfestigkeit zu erhöhen. Für die Imprägnierung von Overlaypapieren werden Harzaufträge mit bis zu 400 Gew% Melaminharz verwendet. Für die meisten Anwendungen (Laminate für Arbeitsplatten oder Zahltheken) reichen Overlays ohne Korund aus.

### Pulverförmiges Harz (Pulveroverlay)

Im Falle der Verwendung von pulverförmigem Harz beträgt die Menge des auf die Oberfläche der Trägerplatte aufgetragenen pulverförmigen Harzes 50-150g/m², bevorzugt 60-100 g/m², insbesondere bevorzugt 70-80 g/m².

Das zum Einsatz kommende pulverförmige Harz weist eine Streudichte von 0,5 bis 1,5 kg/l, bevorzugt 0,8 bis 1,0 kg/l und eine mittlere Partikelgröße von 10 bis 50 µm, bevorzugt 20 bis 30 µm, insbesondere bevorzugt von 25 µm hat.

Das vorliegend verwendete pulverförmige Harz weist nur geringe Spuren von Feuchtigkeit auf. So sollte eine Feuchte von 0,5% nicht überschritten werden, da es ansonsten zu einer Klumpenbildung kommt und ein Streuen nicht mehr möglich ist.

In einer weitergehenden Variante des vorliegenden Verfahrens wird die mit dem pulverförmigen Harz zu bestreuende Oberfläche bzw. Seite der Trägerplatte vor dem Aufstreuen des pulverförmigen Harzes zur Verbesserung der Haftung des pulverförmigen Harzes auf der Oberfläche der Trägerplatte vorbehandelt. Diese Vorbehandlung kann eine Beaufschlagung der Seite bzw. Oberfläche mit Feuchtigkeit oder eine elektrostatische Aufladung der Seite bzw. Oberfläche der Trägerplatte umfassen.

Als pulverförmiges Harz wird ein Formaldehydharz, bevorzugt ein Harnstoffharz, ein Melaminharz oder ein Phenolharz, insbesondere bevorzugt ein Melamin-Formaldehyd-Harz, ein Melamin-Phenol-Formaldehyd-Harz oder ein Melamin-Harnstoff-Formaldehydharz verwendet.

Das pulverförmige Harz wird bevorzugt unter Verwendung einer Streuapparatur aufgebracht. Das Aufstreuen erfolgt bevorzugt in einem kontinuierlichen Durchlaufprozess. Eine geeignete Streuapparatur ist der Präzisionsstreuer "Oszillierendes Ausbürstsystem" der Fa. TPS. Es kann aber auch eine elektrostatische Applikation mit einer Tribopistole erfolgen.

Diese weitere aufzutragende Schicht kann lediglich aus einem pulverförmigen Harz bestehen, oder es ist auch möglich ein Gemisch enthaltend das Harz, natürliche und/oder synthetische Fasern, und ggf. weitere Additive zu verwenden.

Das Pulver setzt sich dabei aus 30 bis 65 Gew%, bevorzugt 40 bis 60 Gew% Fasern, 20 bis 45 Gew%, bevorzugt 30 bis 40 Gew% Bindemittel, und 0 bis 8 Gew%, bevorzugt 0,5 bis 6 Gew% Additiv zusammen. Die natürlichen und / oder synthetischen Fasern sind bevorzugt ausgewählt aus einer Gruppe gebleichte Zellulosefasern oder organische Polymerfasern.

### Flüssiges Harz (Flüssigoverlay)

Im Falle der Verwendung von flüssigem Harz als Harzschicht beträgt die Menge des auf die Oberfläche der Trägerplatte aufgetragenen flüssigen Harzes zwischen 50 und 150 g/m², bevorzugt zwischen 60 und 100 g/m², insbesondere bevorzugt zwischen 70 und 80 g/m², wobei der Feststoffgehalt des Harzes bei ca. 65 Gew% liegt und die üblichen Hilfsstoffe wie Härter, Netzmittel usw. enthält.

Als flüssiges Harz wird ein Formaldehydharz, bevorzugt ein Harnstoffharz, ein Melaminharz oder ein Phenolharz, insbesondere bevorzugt ein Melamin-Formaldehyd-Harz, ein Melamin-Phenol-Formaldehyd-Harz oder ein Melamin-Harnstoff-Formaldehydharz verwendet.

Wie im Falle des Harzpulvers kann auch das flüssige Harz in einem Gemisch mit natürlichen und/oder synthetische Fasern, und ggf. weitere Additive verwendet werden.

### Poröses Beschichtungsmaterial

Wie oben angedeutet, kann auf der mindestens einen Harzschicht ein poröses Beschichtungsmaterial, wie z.B. eine Furnierlage, vorgesehen sein.

Im Falle der Verwendung einer Furnierlage umfasst diese in einer Ausführungsform mindestens eine Lage aus Echtholzfurnier. In einer weitergehenden Ausführungsform umfasst das mindestens eine Furnier mindestens eine Echtholz-Lage mit einer Dicke zwischen 0,2-10 mm, bevorzugt 0,5-5 mm, insbesondere bevorzugt 0,5-2 mm. Das Furnier kann einstückig von einem Stamm, zum Beispiel durch Schälen hergestellt sein. Es kann aber auch aus einzelnen Stücken zusammengesetzt sein, die zum Beispiel durch Bindemittel oder sogenannte Leimfäden miteinander verbunden sind. Das Furnier weist bevorzugt die Abmessungen der Trägerplatte auf. Das Furnier weist eine der Trägerplatte zugewandte Unterseite und eine der Trägerplatte abgewandte Oberseite auf.

### Trägermaterial

Das vorliegend verwendete Trägermaterial liegt in Form einer Trägerplatte, Papierlage oder Folienlage vor.

### Trägerplatte

In einer Ausführungsform des vorliegenden Verfahrens ist die mindestens eine Trägerplatte eine Platte aus einem Holzwerkstoff, insbesondere eine Span-, mitteldichte Faser (MDF)-, hochdichte Faser (HDF)-, Oriented Strand Board (OSB)- oder Sperrholzplatte, einem Holzwerkstoff-Kunststoff-Gemisch oder eine WPC-Platte (Wood Plastic Composites). Die Schichtdicke der auf die Trägerplatte aufgetragenen Harzschicht liegt zwischen 10 und 100 µm, bevorzugt zwischen 30 und 80 µm, insbesondere bevorzugt zwischen 30 und 60 µm.

Die Oberfläche des Trägermaterials kann oberflächenbehandelt sein. Auch kann die Oberfläche einer Holzwerkstoff-Trägerplatte geschliffen sein (ohne Presshaut) oder auch nicht-geschliffen sein (mit Presshaut).

Es ist auch denkbar, dass zwischen Oberfläche des Trägermaterials und Harzschicht mindestens eine Primerschicht oder mindestens eine Grundierung vorgesehen sein kann. Als Primer werden bevorzugt Verbindungen auf Isocyanatbasis verwendet, wobei nichtaromatische, aliphatische Isocyanate, wie Hexamethylendiisocyanat, Isophorondiisocyanat, oder Präpolymere, die diese Isocyanate enthalten, besonders bevorzugt sind.

In einer weiteren Ausführungsform kann vorgesehen sein, dass die mindestens eine Harzschicht auf der Oberseite des Trägermaterials (d.h. der dem Benutzer nach Einbau des Trägermaterials zugewandten Seite) vorgesehen ist, und auf der Rückseite oder Unterseite des Trägermaterials, insbesondere im Falle eine Holzwerkstoffplatte als Trägermaterial, mindestens eine schalldämmende Schicht angeordnet ist.

Derartige Holzwerkstoffplatten werden bevorzugt als Fußbodenplatte, Wandplatte, Deckenplatte, Möbelplatte oder als Schneidbrett verwendet.

### CPL (Continuous Pressure Laminate)

Im Falle einer Papierlage als Trägermaterial wird bevorzugt eine Kraftpapierlage verwendet, die mit mindestens einer Harzschicht in einer kontinuierlich arbeitenden Presse (CPL - Presse) verpresst werden.

Als Harzschicht können harzgetränkte Papierlage, insbesondere harzimprägnierte Dekorpapiere und/oder harzimprägnierte Overlaypapiere und/oder harzimprägnierte Gegenzugpapier verwendet werden, die mit der Kraftpapierlage in einer kontinuierlichen Presse zu Continuous Pressure Laminate (CPL) verpresst werden. Es ist meist als Rollenware erhältlich und wird z. B. zur Herstellung von Arbeitsplatten, ummantelten Profilen und Türblättern verwendet. CPL werden im Durchlauf- oder Endlosverfahren in zweiseitig beheizten Rollenbandpressen verpresst.

Bei der Herstellung von CPL auf Doppelband-Pressen werden in der Kernlage harzimprägnierte Natronkraftpapiere (NKP) eingesetzt.

Die vorliegend verwendeten Kraftpapierlagen weisen ein Gewicht zwischen 50 und 200 g/m², bevorzugt zwischen 80 und 170 g/m², besonders bevorzugt zwischen 80 und 160 g/m² , wie z.B. 80 g/m², 120 g/m² oder 160 g/m² auf. Wie oben bereits erwähnt, weisen Kraftpapiere eine hohe Festigkeit auf und bestehen aus Zellstofffasern, denen Stärke, Alaun und Leim zugesetzt sind, um Oberflächeneffekte und Festigkeitssteigerungen zu erzielen.

Auf die Kraftpapierlage wird mindestens eine weitere Papierlage aufgelegt. Es können beliebig viele Papierlagen aufgelegt werden, wobei zwei, drei oder vier weitere Papierlagen bevorzugt sind.

Die mindestens eine weitere aufzulegende Papierlage kann eine Kraftpapierlage, eine Dekorpapierlage oder eine Overlaypapierlage sein. Bevorzugt wird eine weitere Kraftpapierlage aufgelegt, gefolgt von einer Dekorpapierlage und/oder Overlaypapierlage. Die möglichen Schicht- oder Deckaufbauten werden im Detail weiter unten beschrieben.

Die verwendeten Papierlagen können mit einem Harz, bevorzugt Melamin-Formaldehyd-Harz vollständig durchtränkt (imprägniert) sein. Im Falle eines vollständig imprägnierten Papiers wird eine Harzmenge von 80 - 400 Gew%, bevorzugt 90-120 Gew%, insbesondere bevorzugt 100-110 Gew% bezogen auf das Papiergewicht des Papiers aufgetragen.

In einer Variante ist vorgesehen, dass auf die Kraftpapierlage eine Materiallage (z.B. Glasvlies, Aluminiumfolie) aufgelegt wird, gefolgt von einer zweiten Kraftpapierlage, einer Dekorpapierlage und/oder Overlaypapierlage.

Es ist aber auch möglich, auf eine zweite Kraftpapierlage und/oder Dekorpapierlage zu verzichten, und auf die Materiallage direkt eine Overlaypapierlage aufzulegen. Art und Reihenfolge der aufgelegten weiteren Papierlagen sind dabei je nach Art der Materiallage flexibel gestaltbar. Ist die Materiallage z.B. farbig gestaltet, kann auf ein Dekorpapier verzichtet werden.

Die mindestens eine Materiallage kann ausgewählt sein aus den folgenden Materialien: graphithaltige Papiere zur Leitfähigkeitserhöhung, Kunststofffolien, insbesondere thermoplastische Folien (ermöglichen enge Postformingradien), Aluminiumfolie, Vliesmaterial und andere Stoffmaterialien. Die verwendeten Beschichtungsmaterialien können entweder eine Porosität aufweisen oder unporös, d.h. undurchlässig für Flüssigkeiten, sein. Insbesondere sind Materialien umfasst, die eine Porosität aufweisen, in der flüssiges Harz während des Verpressens aufsteigen kann und die zumindest teilweise plastisch verformbar sind.

Die Verwendung eines Glasvlieses dient der Verbesserung der Stoßfestigkeit. Die Verwendung von Aluminiumfolien, die vor Auflegen bevorzugt mit einem Primer z.B. Isocyanat-Primer versehen werden, verringert die Wasserdampfdurchlässigkeit. Die Dicke der Aluminiumfolien liegt bei 0,1-0, 3 mm, bevorzugt 0,2 mm.

In einer weitergehenden Ausführungsform des vorliegenden Verfahrens wird der Schichtaufbaus aus Kraftpapierlage und mindestens einer weiteren Papierlage mit mindestens einem Strukturgeberpapier (aufgelegt auf die mindestens eine weitere Papierlage auf der Oberseite der Schichtung) und mindestens einem Transparentpapier (auf der Unterseite der Schichtung) verpresst.

Unter einem Strukturgeberpapier ist dabei ein Papier zu verstehen, das nach Auflegen und Verpressen der Oberfläche des Laminats eine Struktur (z.B. 3D-Struktur) verleiht. Das Strukturgeberpapier hat neben der Strukturierungs- auch eine Schutzfunktion, insbesondere während des Pressschritts. Das Strukturgeberpapier wird nach dem Verpressen des Schicht- oder Deckaufbaus wieder entfernt und kann wiederverwertet werden.

Das vorliegend im Laminat zum Einsatz kommende Transparentpapier ist auch unter dem Begriff Pergamin bekannt. Pergamin ist ein aus fein gemahlenem Zellstoff hergestelltes, weitgehend fettdichtes, aber nicht nassfestes Transparentpapier. Seine hohe Transparenz erhält es durch sehr scharfe Satinage.

### NIR-Spektroskopie

In einer Ausführungsform des vorliegenden Verfahrens wird das für die jeweilig zu bestimmenden Parameter der Harzschicht angewendete Kalibriermodell anhand von Referenzproben wie folgt bestimmt:
- Aufnahme von mindestens einem NIR-Spektrum von mehreren Referenzproben mit jeweils unterschiedlichem Werten der gewünschten Parameter unter Verwendung von mindestens einem NIR-Multimesskopf in einem Wellenlängenbereich zwischen 500 nm und 2500 nm, bevorzugt zwischen 700 nm und 2000 nm, insbesondere bevorzugt zwischen 900 nm und 1700 nm, und besonders vorteilhaft zwischen 1450 nm und 1550 nm;
- Bestimmung der gewünschten Parameter der vermessenen Referenzproben mittels nicht-spektroskopischer Methoden;
- Zuordnung der bestimmten Parameter zu den jeweils aufgenommenen NIR-Spektren der vermessenen Referenzproben.

Es werden demnach zunächst Referenzproben des mit einem Harz beschichteten Trägermaterials bereitgestellt. Wesentlich ist, dass die Referenzprobe gleichartig zu der zu vermessenden Probe ist; d.h. insbesondere die Harzschicht der Referenzprobe weist die gleiche Zusammensetzung wie die zu vermessende Harzschicht auf. Die Gleichartigkeit von zu vermessender Probe und Referenzprobe ist insbesondere bei Verwendung von flüssigen Harzschichten mit Zusatzstoffen wie Flammschutzmitteln, Fasern, weiteren Additiven wesentlich.

Von diesen Referenzproben werden zumindest ein NIR-Spektrum in einem Wellenlängenbereich zwischen 500 nm und 2500 nm, bevorzugt zwischen 700 nm und 2000 nm, insbesondere bevorzugt zwischen 900 nm und 1700 nm und besonders vorteilhaft zwischen 1450 nm und 1550 nm, aufgenommen.

Diese Referenzproben werden ebenfalls einer nicht-spektroskopischen Analyse zur Bestimmung der gewünschten Parameter, d.h. Menge, Aushärtungsgrad, Vernetzungsgrad, Feuchtegrad der auf das Trägermaterial aufgetragenen Harzmenge und Menge an aufgetragenen Partikeln und deren Abriebfestigkeit (oder eine Auswahl dieser Parameter) zugeführt. Die nicht-spektroskopischen Analysen werden weiter unten im Detail für jeden der genannten Parameter beschrieben.

Aus den jeweils mittels der nicht-spektroskopischen Analyse ermittelten Parameter für die Referenzproben wird ein Mittelwert gebildet, welcher dann den jeweils aufgenommen NIR-Spektren dieser Referenzproben zugeordnet wird, und es wird ein Kalibriermodell für den Zusammenhang zwischen den spektralen Daten der NIR-Spektren der Referenzproben und den dazugehörigen Parameterwerten mittels einer multivariaten Datenanalyse erstellt; d.h. zu jedem Parameterwert der Referenzprobe korrespondiert ein NIR-Spektrum der Referenzprobe. Die für die verschiedenen Parameter erstellten Kalibriermodelle werden in einem geeigneten Datenspeicher hinterlegt.

Anschließend wird mindestens eine Harzschicht auf mindestens eine Seite des Trägermaterials aufgetragen und mindestens ein NIR-Spektrum der auf das Trägermaterial aufgetragenen Harzschicht aufgenommen. Der gewünschte Parameter der auf das Trägermaterial aufgetragenen Harzschicht kann dann durch Vergleich des für die Harzschicht aufgenommenen NIR-Spektrums mit dem erstellten Kalibriermodell bestimmt werden.

Es ist somit möglich, aus einem einzigen für die zu vermessende Probe ermittelten NIR-Spektrum durch einen automatisierten Vergleich bzw. Abgleich mit den für die jeweiligen Parameter erstellten Kalibriermodellen gleichzeitig mehrere interessierende Parameter der auf ein Trägermaterial aufgetragenen Harzschicht zu bestimmen.

Ein Vergleich und die Interpretation der NIR-Spektren erfolgt sinnvollerweise über den gesamten aufgenommenen Spektralbereich. Dies wird vorteilhaft mit einer an sich bekannten multivariaten Datenanalyse (MDA) durchgeführt. Bei multivariaten Analysemethoden werden in an sich bekannter Weise typischerweise mehrere statistische Variablen zugleich untersucht. Hierzu wird bei diesen Methoden üblicherweise die in einem Datensatz enthaltene Zahl von Variablen reduziert, ohne gleichzeitig die darin enthaltene Information zu mindern.

Im vorliegenden Fall erfolgt die multivariate Datenanalyse über das Verfahren der Partial Least Squares Regression (partielle Regression der kleinsten Quadrate, PLS) wodurch ein geeignetes Kalibrationsmodell erstellt werden kann. Die Auswertung der gewonnenen Daten wird bevorzugt mit einer geeigneten Analysesoftware vorgenommen wie z.B. mit der Analysesoftware SIMCA-P der Firma Umetrics AB oder The Unscrambler der Firma CAMO.

In einer weiteren Ausführungsform ist vorgesehen, für die Erstellung des Kalibriermodells spektrale Daten aus dem NIR- Spektralbereich zwischen 1450 und 1550 nm zu verwenden, die mittels geeigneter mathematischer Methoden vorbehandelt werden und anschließend der multivariaten Datenanalyse zugeführt werden.

Die Bedeutung einer Wellenlänge für die Vorhersage von Parametern der Harzschicht, wie z.B. der Harzmenge, aus dem NIR-Spektrum wird mit Hilfe der Regressionskoeffizienten dargestellt. Dabei haben die Regionen mit großen Koeffizientenbeträgen starken Einfluss auf das Regressionsmodell. So zeigt die Darstellung der Regressionskoeffizienten in einem PLS-Regressionsmodell für die Bestimmung der Harzmenge bzw. des Harzgehaltes, dass der Wellenlängenbereich zwischen 1460 nm und 1530 mit Maximum bei 1490 nm (Absorptionsbande der Amino-Gruppen des Harzes) für die Berechnung des Modells am wichtigsten ist, da hier die Beträge der Regressionskoeffizienten am größten sind. Die anderen Bereiche im Spektrum haben zwar geringeren Informationsgehalt in Bezug auf die NIR-Messung, tragen aber dennoch dazu bei, die weiteren Informationen bzw. störenden Einflussgrößen (wie Transparenz der Schicht, Oberflächenbeschaffenheit der Harzschicht oder des Trägermaterials usw.) zu berücksichtigen bzw. zu minimieren.

Zur Eliminierung von störenden Einflüssen (wie z.B. Beschaffenheit der Oberfläche des Trägermaterials, Farbigkeit der Proben, Lichtstreuung an Feststoffpartikeln oder anderen Additiven usw.) ist es notwendig, die spektralen Daten mit mathematischen Vorbehandlungsmethoden (z. B. derivative Datenvorbehandlung, Standardisierung gemäß SNVT (Standard Normal Variate Transformation), multiplikative Signal-Korrektur (EMSC, Extended Multiplicative Signal Correction usw.) zu bearbeiten. Dabei werden die Basislinieneffekte, die hauptsächlich durch die unterschiedliche Farbe der Proben verursacht werden, aus den Spektren entfernt, überlagernde Banden voneinander getrennt und die Abhängigkeit der Lichtstreuung an der Substratoberfläche oder an den Feststoffpartikeln in der Beschichtung berücksichtigt. Soll z.B. die Harzauftragsmenge auf unbehandelten Oberflächen von Trägermaterialien wie z.B. Holzwerkstoffplatten bestimmt werden, erfolgt die Datenvorbehandlung bevorzugt zur Reduzierung der Lichtstreuung an der rauen Oberfläche des Substrates. Bei der Messung auf Dekorschicht liegt der Schwerpunkt der Kalibrierung und Datenvorbehandlung auf der Entfernung der Basislinienverschiebung.

Aus den vorbehandelten Daten wird mit Hilfe der multivariaten Datenanalyse ein Kalibriermodell entwickelt, das alle bei der Kalibrierung verwendeten Dekore beinhaltet.

Entsprechend erfolgen der Vergleich und die Interpretation der NIR-Spektren bevorzugt im Spektralbereich zwischen 500 nm und 2500 nm, bevorzugt zwischen 700 nm und 2000 nm, insbesondere bevorzugt zwischen 900 nm und 1700 nm und besonders vorteilhaft zwischen 1450 nm und 1550 nm unter Verwendung der multivariaten Datenanalyse MDA. Bei multivariaten Analysemethoden werden in an sich bekannter Weise typischerweise mehrere statistische Variablen zugleich untersucht. Hierzu wird die in einem Datensatz enthaltene Zahl von Variablen reduziert, ohne gleichzeitig die darin enthaltene Information zu mindern.

Wie bereits angemerkt, werden die Referenzproben sowohl spektroskopisch als auch nichtspektroskopisch vermessen bzw. bestimmt, um so die Parameter den aufgenommenen NIR-Spektren der Referenzproben zuzuordnen.

Je nach Parameter werden unterschiedliche nicht-spektroskopische Analysemethoden verwendet.

Menge der aufgetragenen Harzschicht:
Ein gängiges Verfahren zur Bestimmung von Auftragsmengen ist das Auswiegen. Dabei wird das Trägermaterial mit dem Beschichtungsmedium im Auftragsaggregat beschichtet und anschließend durch Bestimmung der Wiegedifferenz die Auftragsmenge bestimmt (siehe auch EP 3 428 619 B1).

Feuchte der aufgetragenen Harzschicht:
Das Darrprobe-Verfahren ist die genaueste Methode zur Bestimmung der Feuchte (insbesondere der Holzfeuchte), wobei eine Probe bei 103+/-2°C für 24 Stunden in einem Trockenofen getrocknet wird. Die Feuchte ist definiert als das Verhältnis des Gewichts des im Material enthaltenen Wassers zum Gewicht des absolut trockenen Materials (Darrgewicht). Die Feuchte ist demnach das Verhältnis zwischen Nassgewicht und Trockengewicht (Darrgewicht); siehe EP 2 808 636 B1.

Aushärtungsgrad der aufgetragenen Harzschicht:
Die Aushärtung wird über den sogenannten Säuretest bestimmt. Dabei wird die Oberfläche für einen definierten Zeitraum mit einer verdünnten Mineralsäure (4 molare Salzsäure) beansprucht. Anschließend wird die Glanzgrad- und/oder Farbänderung beurteilt. Dabei ist die Aushärtung umso stärker je weniger Glanzgrad-/Farbverlust zu beobachten ist. Aus den Ergebnissen des Säuretests für eine Platte wird ein Mittelwert gebildet und dem Spektrum dieser Platte zugeordnet, siehe EP 3 238 934 B1.

Vernetzungsgrad der aufgetragenen Harzschicht:
Die Bestimmung des Vernetzungsgrades von teilvernetzten Prekondensaten oder Polykondensaten (auch bekannt als teilvernetzter, noch teilweise löslicher B-Zustand) kann über den VC-Test (Volatile Compound-Test) erfolgen, bei dem nicht nur Wasser sondern auch zu einem geringen Anteil Formaldehyd aus den Kunstharzen abgespalten wird.

Für den VC-Test wird eine Probe (üblicherweise 10 x 10 cm) gewogen und 5 min bei 105°C getrocknet. Nach dem Abkühlen wird die Probe erneut gewogen. Danach wird ausgehen vom Endgewicht der Masseverlust bestimmt und als Prozentwert angegeben. Das zuvor bestimmte Papiergewicht dient als Basis für die Bestimmung des Harzauftrages in Prozent (( Endgewicht - Papiergewicht / Papiergewicht ) x 100), siehe EP 3 327 424 B1.

Neben der Bestimmung des VC-Wertes wird das das Verhältnis von Wasserpeak bei 1950 nm und Methylolpeak bei 2050 nm (erste Oberschwingung) im gemessenem NIR - Spektrum zur Bestimmung des Vernetzungsgrades einer Harzschicht herangezogen. Die Bestimmung dieses Verhältnisses als Maß für den Vernetzungsgrad ist insbesondere bei Verwendung von überlagerten Imprägnaten vorteilhaft Die Prüfung zwischen freiem und gebundenem Wasser erfolgt durch die Kombination von VC-Test und Lagerung eines Imprägnats in einem Exsikkator über Trockenmittel. Bei der Kalibration wird dann das Verhältnis zwischen dem Wasser- und dem Methylolpeak betrachtet.

Harzpenetration in poröse Beschichtung:
Die Bestimmung der Harzpenetration in eine poröse Beschichtung der Referenzproben erfolgt auf einem Taber-Abraser. Die Prüfung erfolgte in Anlehnung an die DIN EN 13329. Die Reibräder des Taber-Abrasers wurden mit den üblichen Schleifpapieren beklebt und auch mit den üblichen Gewichten belastet. Dann wurde jeweils nach 200 Umdrehungen visuell geprüft, ob bereits schwarze Verfärbungen im Furnier zu beobachten waren. Dann wurde mit einer Messuhr, in der durch das Schleifpapier erzeugten kreisförmigen Vertiefung in den vier Kreissegmenten, die durch ein Koordinatenkreuz gebildet werden, der Abtrag in mm bestimmt und daraus der Mittelwert gebildet. Aus diesem Mittelwert wurde zusammen mit den vier anderen Proben ein Gesamtmittelwert gebildet. Von der Furnierstärke, die mit Hilfe eines Mikroskops bestimmt wurde, wurde dann der Abtrag subtrahiert und dann mit den Spektren korreliert, siehe WO 2022/179883.

### Produktionslinie

Das vorliegende Verfahren wird in einer Produktionslinie umfassend mindestens eine Presse, mindestens einen NIR-Multimesskopf, bevorzugt mindestens zwei NIR-Multimessköpfe, und mindestens ein Steuerungssystem durchgeführt. Eine solche Produktionslinie kann in eine Linie zur Herstellung von harzbeschichteten Werkstoffplatten oder eine CPL-Anlage zur Herstellung von Laminaten (CPL) integriert sein.

Insbesondere umfasst die Produktionslinie mindestens einen ersten NIR-Multimesskopf, der stromaufwärts (vor) von einer Presse angeordnet ist, und/oder mindestens einen zweiten NIR-Multimesskopf, der stromabwärts (nach) von dieser Presse angeordnet ist.

Das Steuerungssystem umfasst mindestens eine computergestützte Auswerteeinheit (bzw. Prozessoreinheit) und eine Datenbank. In der Auswerteeinheit erfolgt der Abgleich bzw. Vergleich des für das Produkt (d.h. Trägermaterial mit aufgetragener Harzschicht) gemessenen NIR-Spektrums mit den für die jeweils einzelnen Parameter erstellten Kalibriermodellen. Die so bestimmten Parameterdaten werden in der Datenbank gespeichert.

Die mit dem vorliegenden spektroskopischen Verfahren bestimmten Daten können erfindungsgemäß zur Steuerung der Presse verwendet werden. Die berührungslos gemessenen Parameterwerte des NIR-Multimesskopfes ("Ist-Werte") können, wie zuvor bereits beschrieben, direkt und in "real time" für die Steuerung bzw. Regelung der betreffenden Presse verwendet werden, indem beispielsweise die gemessenen und in der Datenbank, z.B. einer relationalen Datenbank, Ist-Werte gespeichert und mit dort vorhandenen Soll-Werten dieser Parameter verglichen werden. Die sich ergebenden Differenzen werden anschließend zur Steuerung bzw. Regelung der Presse verwendet.

Für den Abgleich und die Steuerung der Presse wird ein computerimplementiertes Verfahren sowie ein Computerprogramm umfassend Befehle, die bei der Ausführung des Programms durch einen Computer diesen veranlassen das computerimplementierte Verfahren auszuführen, bereitgestellt. Das Computerprogramm ist in einer Speichereinheit des Steuerungssystems der Presse gespeichert. Es ist auch möglich, dass die Presse als Teil einer Produktionslinie mit mindestens einer weiteren Produktionslinie vernetzt ist.

Wie erwähnt, kann die zu steuernde Presse in eine Produktionslinie zur Beschichtung von Werkstoffplatten integriert sein.

In einer Ausführungsform kann eine solche Produktionslinie folgenden Aufbau aufweisen:
- mindestens eine erste Auftragsvorrichtung zum Auftragen einer ersten Harzschicht auf die Oberseite und/oder Unterseite der Werkstoffplatte,
- mindestens eine in Verarbeitungsrichtung hinter der ersten Auftragsvorrichtung angeordnete erste Trocknungsvorrichtung zum Trocknen der ersten oberen und/oder unteren Harzschicht;
- mindestens eine in Verarbeitungsrichtung hinter der ersten Trocknungsvorrichtung angeordnete zweite Auftragsvorrichtung zum Auftragen einer zweiten Harzschicht auf die Oberseite und/oder Unterseite der Werkstoffplatte,
- mindestens eine in Verarbeitungsrichtung hinter der zweiten Auftragsvorrichtung angeordnete zweite Trocknungsvorrichtung zum Trocknen der zweiten oberen und/oder unteren Harzschicht;
- optional mindestens eine in Verarbeitungsrichtung hinter der zweiten Trocknungsvorrichtung angeordnete dritte Auftragsvorrichtung zum Auftragen einer dritten Harzschicht auf die Oberseite und/oder Unterseite der Werkstoffplatte,
- optional mindestens eine in Verarbeitungsrichtung hinter der dritten Auftragsvorrichtung angeordnete dritte Trocknungsvorrichtung zum Trocknen der dritten oberen und/oder unteren Harzschicht; und
- mindestens ein in Verarbeitungsrichtung hinter der zweiten oder optional dritten Trocknungsvorrichtung angeordneter erster NIR-Messkopf, insbesondere ein NIR-Multimesskopf, zur online-Bestimmung des Vernetzungsgrades der auf der Oberseite der Werkstoffplatte angeordneten Harzschicht;
- mindestens eine Pressvorrichtung, insbesondere eine Kurztaktpresse, zum Verpressen des Schichtaufbaus, und
- mindestens ein in Verarbeitungsrichtung hinter der Pressvorrichtung angeordneter zweiter NIR-Messkopf, insbesondere ein NIR-Multimesskopf, zur online-Bestimmung des Aushärtungsgrades der auf der Oberseite der Werkstoffplatte angeordneten, verpressten Harzschicht.

Eine CPL-Anlage zur Herstellung von Laminaten umfasst eine kontinuierlich arbeitende Presse, wobei ein erster NIR-Messkopf, insbesondere ein NIR-Multimesskopf, zur online-Bestimmung des Vernetzungsgrades vor der Presse (Stromaufwärts) und ein zweiter NIR-Messkopf, insbesondere ein NIR-Multimesskopf, zur online-Bestimmung des Aushärtungsgrades nach der Presse (stromabwärts) vorgesehen sind.

Die Erfindung wird nachfolgend unter Bezugnahme auf mehreren Ausführungsbeispielen näher erläutert.

### Ausführungsbeispiel 1: Bestimmen des Aushärtungsgrades der auf einer Holzwerkstoffplatte aufgetragenen Harzschicht

Erstellen einer Referenzprobe und Kalibrierung:
Die Kalibrierung erfolgt durch Aufnahme eines NIR-Spektrums von einer ausgehärteten Probe, die anschließend auf die Aushärtung mittels Säuretests geprüft wird, und wie folgt durchgeführt wird.

Mit verschiedenen Dekoren bedruckten HDF-Platten (207 cm x 280 cm) werden an der Beschichtungsanlage mittels Auftragswalze von oben mit flüssigem Melamin-Formaldehyd(MF) Harz oder mit einem mit MF-Harz imprägniertem Overlay-Papier beschichtet und anschließend in einer Kurztaktpresse bei 190-210°C und ca. 40 bar 8 bis 36 Sekunden lang gepresst. Dabei wird die Schutzschicht ausgehärtet. Durch die Variation der Presszeit und Presstemperatur werden Proben mit unterschiedlich ausgehärteten Schutzschichten erreicht.

Bei der Kalibrierung für eine online-Messung erfolgt die Aufnahme der NIR-Spektren wenige Sekunden nach dem Pressvorgang direkt an der Produktionslinie. Anschließend wird die Platte an den Stellen, wo die NIR-Spektren aufgenommen wurden, mittels Säuretest auf die Aushärtung geprüft. Aus den Ergebnissen des Säuretest für eine Platte wird ein Mittelwert gebildet und dem Spektrum dieser Platte zugeordnet.

Auf dieser Weise werden mehrere Referenzspektren von unterschiedlich ausgehärteten Platten mit verschiedenen Farbdekoren (für Kalibrierung der online-Messung) aufgenommen.

Der Säuretest wird wie folgt durchgeführt. Auf eine auf Zimmertemperatur abgekühlte Platte werden drei Tropfen 6 M HCl gegeben. Nach 25 Minuten Einwirkzeit wird die Säure mit Wasser abgespült. Anhand der optischen und haptischen Beurteilung der Oberfläche an der Einwirkstelle wird eine Aussage über die Qualität der Aushärtung getroffen.

Zur Kalibrierung wird das Ergebnis des Tests in Korrelation mit spektralen Daten gebracht. Die Erstellung des Kalibrationsmodells erfolgt mittels multivariate Datenanalyse. Dies geschieht mit einer geeigneten Analysesoftware z. B. mit The Unscrambler der Firma CAMO. Dieses Programm ermöglicht unter anderem durch speziellen Vorbehandlungstechniken der spektralen Daten verschiedenen Störfaktoren auf die Messung solche wie Oberflächenbeschaffenheit der Proben, Infrarot-inaktive Füllstoffe in der Beschichtung oder unterschiedlichen Farben der Proben und weitere, zu minimieren. Der Farbeinfluss auf die NIR-Messung kann, wie bereits zuvor beschrieben, zusätzlich durch die Bildung von Dekorgruppen, die eine ähnliche Farbeinteilung aufweisen, gelöst werden.

Aus den Referenzspektren wird ein Kalibrationsmodell erstellt, welches zu Ermittlung (Vorhersage) der Aushärtung einer unbekannten Probe genutzt werden kann.

Bei der Online -NIR-Messung wird dann direkt das Ergebnis des Säuretests bzw. Qualität der Aushärtung vorhergesagt.

Online-Messung des Aushärtungsgrades einer Harzbeschichtung:
Bei der Onine-Bestimmung der Aushärtung hinter der Presse erfolgt die NIR-Messung bzw. Aufnahme der NIR-Spektren direkt an der Produktionsanlage, gleich nach der Aushärtung der Harzbeschichtung. Nach dem Erstellen eines Kalibrationsmodell wird dieses in dem Messgerät installiert. Beim Durchfahren der Proben unter dem Messkopf werden mehrere NIR-Spektren von der Beschichtung aufgenommen. Mit dem Kalibrationsmodell wird aus den aufgenommenen Spektren eine mittlere Aushärtung (Säure-Test) der Beschichtung berechnet. Auf diese Art wird jede Platte auf die Qualität der Aushärtung während der Produktion untersucht.

Hinter der Presse befindet sich ein NIR-Multimesskopf, der sich auf einer Traverse über die Warenbahn bewegt. Bei Abweichungen von den Sollvorgaben werden durch eine automatische Steuerung oder Regelung die Betriebsparameter in der Presse an die Soll-Werte angepasst.

### Ausführungsbeispiel 2: Bestimmen des Vernetzungsgrades

### a) Vernetzungsgrad von Imprägnaten

Erstellen einer Referenzprobe und Kalibrierung:
Im Falle von imprägnierten Papieren werden für die Kalibrierung der NIR-Messung zunächst Imprägnate in verschiedenen Trocknungszuständen mit dem NIR-Messkopf vermessen. Dazu werden Imprägnate aus einem Imprägnierkanal entnommen, die bei verschiedenen Geschwindigkeiten produziert werden. Dabei werden die Geschwindigkeiten des Imprägnierkanals um das an sich bekannte Optimum nach oben und unten variiert. Dann werden die Proben per NIR-Messkopf vermessen und dann im Ofen der VC-Wert bestimmt. Nach fünf Minuten Trocknung ist der ausgehärtete Endzustand (C-Zustand) erreicht. Nach dem Trocknen im Ofen werden die Proben ein zweites Mal mit Hilfe des NIR-Messkopfes vermessen. Diese Messung liefert den Endpunkt der Trocknung.

Nach der Korrektur der Basislinienverschiebung zeigen die Spektren Veränderung der Absorptionsintensität der NIR-Banden bei ca. 1450 nm (Wasser) und bei ca. 1490 nm (N-H-Gruppen).

Man kann dann eine Korrelation zwischen den VC-Werten und den NIR-Spektren erstellen. Die Erstellung des Kalibriermodells, das den Zusammenhang zwischen den NIR-Spektren und den dazugehörigen VC-Werten beschreibt, erfolgt mit den multivariaten Regressionsverfahren (z. B. mit MLR-, PCR- oder PLS-Regressionsverfahren usw.). Die Auswertung wird über das gesamte Spektrum durchgeführt. Je länger die Probe im Ofen getrocknet wird, umso höher ist der Vernetzungsgrad. Es können dabei auch Proben vermessen werden, die einen höheren VC-Wert besitzen als üblicherweise angestrebt. Mit der Prüfung dieser untertrockneten Proben kann auch eine verbesserte Steuerung des Imprägnierkanals (Trockenkanals) erreicht werden. Die untertrockneten Proben haben einen Methylolgruppen-Gehalt, der über dem Optimum liegt, die übertrockneten haben einen Methylolgruppen-Gehalt, der unter dem Optimum liegt. Somit ist durch die Aufnahme der NIR-Spektren in Kombination mit einer Visualisierung eine Steuerung des Kanals anhand des Methylolgruppen-Gehaltes möglich. Mit diesen Daten kann also nach Kalibrierung für die verschiedenen Harz- und Papiersysteme eine grundsätzliche Voraussage über den Zustand der Aushärtung gemacht werden.

### Messung des Vernetzungsgrades:

In einem Imprägnierkanal wird ein Overlay (Papiergewicht: 25 g/m²) mit einem Gemisch aus Melaminharz und Korund imprägniert. Die gesamte Auftragsmenge liegt bei ca. 75 g/m², wovon ca. 55 g Melaminharz sind. Der Imprägnierkanal wird mit verschiedenen Geschwindigkeiten gefahren. Von den einzelnen Geschwindigkeitsvarianten werden in einem solchen Versuch Proben gezogen und mit Hilfe des NIR-Messkopfes vermessen. Anschließend wurden sie auf ihren VC-Wert untersucht. Dabei wurden VC-Werte von 3,0 bis 8 % gefunden. Alle Proben wurden nach dem Trocknen ein zweites Mal mit dem NIR-Messkopf vermessen.

Aus den Spektren und den VC-Werten wurde anschließend eine Korrelation erstellt, die eine Vorhersage des Vernetzungsgrades an anderen Overlay-Mustern zuließ.

### b) Vernetzung von auf Trägerplatten aufgetragenen Harzschichten

Dieses Verfahren ist selbstverständlich auch bei Systemen einsetzbar, bei denen die vorgehärteten Harze direkt auf bedruckte oder nicht bedruckte Holzwerkstoffplatten aufgebracht werden. Bei diesen Platten stellen sich die gleichen Probleme wie bei imprägnierten Papieren.

Auch hier ist es wichtig, den Vernetzungsgrad des auf der Platte befindlichen Kunstharzes zu kennen. Dies gilt sowohl für eine verkettete Produktionslinie, bei der nach dem Harzauftrag und der Trocknung direkt die Weiterverarbeitung in einer Kurztakt (KT)- oder kontinuierlich laufenden Presse (Conti-Presse) erfolgt, als auch in einer nicht verketteten Produktionslinie, in der nach dem Harzauftrag und der Trocknung zunächst eine Zwischenlagerung stattfindet, bevor zu einem späteren Zeitpunkt das Zwischenprodukt weiterverarbeitet wird. In dem beschriebenen Fall ist die Bestimmung des Vernetzungszustandes vor der Presse umso wichtiger, da im Gegensatz zu imprägnierten Papieren, eine Qualitätsbestimmung der üblicherweise zu bestimmenden Parameter nach der Presse ansonsten kaum möglich ist.

Durch eine direkt an der Produktionslinie durchgeführte Messung, kann bei Abweichungen vom Sollzustand unverzüglich eine Anpassung der Betriebsparameter der Presse vorgenommen werden.

Vor der Presse befindet sich ein NIR-Multimesskopf, der sich auf einer Traverse über die Warenbahn bewegt. Bei Abweichungen von den Sollvorgaben werden durch eine automatische Steuerung oder Regelung die Betriebsparameter in der Presse an die Soll-Werte angepasst.

### Ausführungsbeispiel 3: kombinierte Bestimmung von Aushärtungsgrad und Vernetzungsgrad zur Steuerung der Presse

Die vor der Presse ermittelten Parameter des Vernetzungsgrades und die nach der Presse ermittelten Parameter des Aushärtungsgrades werden kombiniert betrachtet. Bei Abweichungen von den Sollvorgaben für beide Parameter werden durch eine automatische Steuerung oder Regelung die Betriebsparameter in der Presse an die kombinerten Soll-Werte angepasst.

### Ausführungsbeispiel 4: Nutzung des Vernetzungsgrads zur Ermittlung von überlagerten Imprägnaten

Eine Palette mit einer Restmenge an Overlays ( Parameter des Imprägnates: Endgewicht 150 g/m², VC-Wert: 5,8% ) wurde zur Herstellung von Laminatboden eingesetzt. Dabei wurde vor der Presse durch einen NIR-Messkopf ein hoher Vernetzungsgrad des Imprägnats festgestellt. Eine Bestimmung des VC-Wertes ergab 5,6%. Eine Probeverpressung zeigte dann eine etwas schlechtere Transparenz und nur einen geringfügigen Anstieg des Vernetzungsgrades durch die Messung eines zweiten NIR-Messkopf. Daraus wurde der Schluss gezogen, dass die Palette überlagert ist und nicht mehr für die Produktion geeignet ist.

## Patentansprüche

1. Verfahren zur Steuerung einer Presse zur Anpassung von Betriebsparametern der Presse,
wobei die Presse zum Verpressen eines Trägermaterials mit mindestens einer auf dem Trägermaterial angeordneten Harzschicht geeignet ist,
wobei mindestens ein NIR-Multimesskopf in Laufrichtung des zu verpressenden Trägermaterials vor der Presse und mindestens ein NIR-Multimesskopf in Laufrichtung des zu verpressenden Trägermaterials nach der Presse vorgesehen sind;
wobei die NIR-Multimessköpfe mit mindestens einem Steuerungssystem zur Steuerung der Presse mit mindestens einer computergestützten Auswerteeinheit und einer Datenbank zur Prozessierung und ggfs. Speicherung der aufgenommenen und ausgewerteten NIR-Daten verbunden sind,
umfassend die Schritte
- Bestimmen des Vernetzungsgrades der auf dem Trägermaterial angeordneten Harzschicht als mindestens einem ersten Parameter durch Aufnahme von mindestens einem NIR-Spektrum der auf das Trägermaterial aufgetragenen Harzschicht in einem Wellenlängenbereich zwischen 500 nm und 2500 nm, bevorzugt zwischen 700 nm und 2000 nm, insbesondere bevorzugt zwischen 900 nm und 1700 nm und besonders vorteilhaft zwischen 1450 nm und 1550 nm, durch den mindestens einen vor der Presse angeordneten NIR-Multimesskopf, und Auswertung des aufgenommenen NIR-Spektrums in der Auswerteeinheit durch einen automatisierten Vergleich des aufgenommenen NIR-Spektrums mit einem für den Parameter der Harzschicht erstellten Kalibriermodell,
- Bestimmen des Aushärtungsgrades der auf dem Trägermaterial angeordneten Harzschicht als mindestens einem zweiten Parameter der auf dem Trägermaterial angeordneten Harzschicht durch Aufnahme von mindestens einem NIR-Spektrum der auf das Trägermaterial aufgetragenen Harzschicht in einem Wellenlängenbereich zwischen 500 nm und 2500 nm, bevorzugt zwischen 700 nm und 2000 nm, insbesondere bevorzugt zwischen 900 nm und 1700 nm und besonders vorteilhaft zwischen 1450 nm und 1550 nm, durch den mindestens einen nach der Presse angeordneten NIR-Multimesskopf und Auswertung des aufgenommenen NIR-Spektrums in der Auswerteeinheit durch einen automatisierten Vergleich des aufgenommenen NIR-Spektrums mit einem für den Aushärtungsgrad der Harzschicht erstellten Kalibriermodell;
wobei der vor der Presse bestimmte Vernetzungsgrad (Ist-Wert des Vernetzungsgrades) mit einem Soll-Wert des Vernetzungsgrades verglichen wird, und
wobei der nach der Presse bestimmte Aushärungsgrad (Ist-Wert des Aushärtungsgrades) mit einem Soll-Wert des Aushärtungsgrades verglichen wird, und
wobei bei Abweichung des Ist-Wertes des Vernetzungsgrades und bei Abweichung des Ist-Wertes des Aushärtungsgrades von den jeweiligen Soll-Werten die Betriebsparameter der Presse durch das Steuerungssystem automatisch so angepasst werden, dass der Soll-Wert des Vernetzungsgrades und der Soll-Wert des Aushärtungsgrades erfüllt wird, und
wobei die zu steuernden Betriebsparameter der Presse ausgewählt sind aus Presstemperatur, Pressdruck und/oder Presszeit.

2. Verfahren nach Anspruch 1, **dadurch gekennzeichnet, dass** die zu steuernden Betriebsparameter der Presse ausgewählt sind aus Presstemperatur und Presszeit.

3. Verfahren nach einem der vorhergehenden Ansprüche, **dadurch gekennzeichnet, dass** die Presszeit in einem Bereich zwischen 6 und 40 Sekunden, bevorzugt 8 und 36 Sekunden liegt.

4. Verfahren nach einem der vorhergehenden Ansprüche, **dadurch gekennzeichnet, dass** die Presstemperatur am Vorlauf der zu steuernden Presse zwischen 180°C und 220°C, bevorzugt 190°C und 200°C beträgt.

5. Verfahren nach einem der vorhergehenden Ansprüche, **dadurch gekennzeichnet, dass** zu steuernde Presszeit und Presstemperatur gegenläufig zueinander sind.

6. Verfahren nach einem der vorhergehenden Ansprüche, **dadurch gekennzeichnet, dass** zusätzlich zum Vernetzungsgrad folgende Parameter, insbesondere mittels NIR-Spektroskopie, vor der Presse bestimmt werden: Feuchtegehalt der aufgetragenen Harzschicht und Menge der aufgetragenen Harzschicht.

7. Verfahren nach einem der vorhergehenden Ansprüche, **dadurch gekennzeichnet, dass** zusätzlich zum Aushärtungsgrad folgende Parameter, insbesondere mittels NIR-Spektroskopie, nach der Presse bestimmt werden: Harzpenetration (bzw. Penetrationshöhe / Penetrationsmenge des Harzes) in mindestens ein auf dem harzbeschichteten Trägermaterial angeordnetem porösen Beschichtungsmaterial.

8. Verfahren nach einem der vorhergehenden Ansprüche, **dadurch gekennzeichnet, dass** die mindestens eine Presse eine Kurztaktpresse (KT-Presse) ist.

9. Verfahren nach einem der Ansprüche 1-7, **dadurch gekennzeichnet, dass** die mindestens eine Presse eine kontinuierliche Presse (CPL Presse) ist.

10. Verfahren nach Anspruch 9, **dadurch gekennzeichnet, dass** der Pressschritt in der Presse (CPL- Presse) bei einem angelegten Pressdruck zwischen 50 - 70 kg/cm² und einer Temperatur zwischen 150 und 200°C, bevorzugt 180°C, und einer Anlagengeschwindigkeit von 5-20 m/min, bevorzugt 5 bis 15 m/min durchgeführt wird.

11. Verfahren nach einem der vorhergehenden Ansprüche, **dadurch gekennzeichnet, dass** die mindestens eine Harzschicht eine harzgetränkten Papierlage, ein harzhaltiges Pulver oder eine harzhaltige Flüssigkeit umfasst.

12. Verfahren nach einem der vorhergehenden Ansprüche, **dadurch gekennzeichnet, dass** das Trägermaterial in Form einer Trägerplatte, Papierlage oder Folienlage vorliegt.

13. Verfahren nach einem der vorhergehenden Ansprüche, **dadurch gekennzeichnet, dass** das für die jeweilig zu bestimmenden Parameter der Harzschicht angewendete Kalibriermodell anhand von Referenzproben wie folgt bestimmt wird:
- Aufnahme von mindestens einem NIR-Spektrum von mehreren Referenzproben mit jeweils unterschiedlichem Werten der gewünschten Parameter unter Verwendung von mindestens einem NIR-Multimesskopf in einem Wellenlängenbereich zwischen 500 nm und 2500 nm, bevorzugt zwischen 700 nm und 2000 nm, insbesondere bevorzugt zwischen 900 nm und 1700 nm, und besonders vorteilhaft zwischen 1450 nm und 1550 nm;
- Bestimmung der gewünschten Parameter der vermessenen Referenzproben mittels nicht-spektroskopischer Methoden;
- Zuordnung der bestimmten Parameter zu den jeweils aufgenommenen NIR-Spektren der vermessenen Referenzproben.

14. Produktionslinie zur Durchführung eines Verfahrens nach einem der vorhergehenden Ansprüche umfassend mindestens eine Presse, mindestens einen ersten NIR-Multimesskopf, der stromaufwärts (vor) von der Presse angeordnet ist, und mindestens einen zweiten NIR-Multimesskopf, der stromabwärts (nach) von der Presse angeordnet ist, und mindestens ein Steuerungssystem zur Steuerung der Presse, wobei das Steuerungssystem der Presse mindestens eine computergestützte Auswerteeinheit und eine Datenbank umfasst.

## Claims

1. Method for controlling a press to adjust the operating parameters of the press,
wherein the press is suitable for pressing a carrier material with at least one resin layer arranged on the carrier material,
wherein at least one NIR multi-measuring head is provided before the press in the direction of travel of the carrier material to be pressed and at least one NIR multi-measuring head is provided after the press in the direction of travel of the carrier material to be pressed;
wherein the NIR multi-measurement heads are connected to at least one control system for controlling the press with at least one computer-aided evaluation unit and a database for processing and, if necessary, storing the recorded and evaluated NIR data,
comprising the steps of:
- Determining the degree of crosslinking of the resin layer arranged on the carrier material as at least one first parameter by recording at least one NIR spectrum of the resin layer applied to the carrier material in a wavelength range between 500 nm and 2500 nm, preferably between 700 nm and 2000 nm, in particular preferably between 900 nm and 1700 nm and particularly advantageously between 1450 nm and 1550 nm, by the at least one NIR multi-measurement head arranged before the press, and evaluating the recorded NIR spectrum in the evaluation unit by an automated comparison of the recorded NIR spectrum with a calibration model created for the parameter of the resin layer,
- Determining the degree of curing of the resin layer arranged on the carrier material as at least a second parameter of the resin layer arranged on the carrier material by recording at least one NIR spectrum of the resin layer applied to the carrier material in a wavelength range between 500 nm and 2500 nm, preferably between 700 nm and 2000 nm, in particular preferably between 900 nm and 1700 nm and particularly advantageously between 1450 nm and 1550 nm, by the at least one NIR multimeter head arranged after the press and evaluating the recorded NIR spectrum in the evaluation unit by an automated comparison of the recorded NIR spectrum with a calibration model created for the degree of curing of the resin layer;
wherein the degree of crosslinking determined before the press (actual value of the degree of crosslinking) is compared with a target value of the degree of crosslinking, and
wherein the degree of curing determined after the press (actual value of the degree of curing) is compared with a target value of the degree of curing, and
wherein, if the actual value of the degree of crosslinking and the actual value of the degree of curing deviate from the respective target values, the operating parameters of the press are automatically adjusted by the control system so that the target value of the degree of crosslinking and the target value of the degree of curing are met, and
whereby the operating parameters of the press to be controlled are selected from pressing temperature, pressing pressure and/or pressing time.

2. Method according to claim 1, **characterized in that** the operating parameters of the press to be controlled are selected from pressing temperature and pressing time.

3. Method according to one of the preceding claims, **characterized in that** the pressing time is in a range between 6 and 40 seconds, preferably 8 and 36 seconds.

4. Method according to one of the preceding claims, **characterized in that** the pressing temperature at the inlet of the press to be controlled is between 180°C and 220°C, preferably 190°C and 200°C.

5. Method according to one of the preceding claims, **characterized in that** the pressing time to be controlled and the pressing temperature are opposite to each other.

6. Method according to one of the preceding claims, **characterized in that**, in addition to the degree of crosslinking, the following parameters are determined before the press, in particular by means of NIR spectroscopy: Moisture content of the applied resin layer and quantity of the applied resin layer.

7. Method according to one of the preceding claims, **characterized in that**, in addition to the degree of curing, the following parameters are determined after the press, in particular by means of NIR spectroscopy: Resin penetration (or penetration height / penetration quantity of the resin) in at least one porous coating material arranged on the resin-coated carrier material.

8. Method according to one of the preceding claims, **characterized in that** the at least one press isa short-cycle press (KT press).

9. Method according to one of claims 1-7, **characterized in that** the at least one press is a continuous press (CPL press).

10. Method according to claim 9, **characterized in that** the pressing step is carried out in the press (CPL press) at an applied pressing pressure of between 50 - 70 kg/cm² and a temperature of between 150 and 200°C, preferably 180°C, and a system speed of 5-20 m/min, preferably 5 to 15 m/min.

11. Method according to one of the preceding claims, **characterized in that** the at least one resin layer comprises a resin-impregnated paper layer, a resin-containing powder or a resin-containing liquid.

12. Method according to one of the preceding claims, **characterized in that** the carrier material is in the form of a carrier plate, paper layer or film layer.

13. Method according to one of the preceding claims, **characterized in that** the calibration model used for the respective parameters of the resin layer to be determined is determined on the basis of reference samples as follows:
- Recording of at least one NIR spectrum of several reference samples, each with different values of the desired parameters, using at least one NIR multi-measurement head in a wavelength range between 500 nm and 2500 nm, preferably between 700 nm and 2000 nm, particularly preferably between 900 nm and 1700 nm, and especially advantageously between 1450 nm and 1550 nm;
- Determination of the desired parameters of the measured reference samples using non-spectroscopic methods;
- Assignment of the determined parameters to the recorded NIR spectra of the measured reference samples.

14. A production line for carrying out a method according to any one of the preceding claims, comprising at least one press, at least one first NIR multi-measuring head arranged upstream of (before) the press and at least one second NIR multi-measuring head arranged downstream of (after) the press, and at least one control system for controlling the press, wherein the control system of the press comprises at least one computerized evaluation unit and a database.

## Revendications

1. Procédé de commande d'une presse pour l'adaptation de paramètres de fonctionnement de la presse,
dans lequel la presse est appropriée pour le pressage d'un matériau de support avec au moins une couche de résine disposée sur le matériau de support,
dans lequel au moins une tête de multimesure NIR dans le sens de marche du matériau de support à presser avant la presse et au moins une tête de multimesure NIR dans le sens de marche du matériau de support à presser après la presse sont prévues ;
dans lequel les têtes de multimesure NIR sont reliées à au moins un système de commande pour la commande de la presse avec au moins une unité d'évaluation assistée par ordinateur et une base de données pour le traitement et, le cas échéant, le stockage des données NIR enregistrées et évaluées,
comprenant les étapes
- de détermination du degré de réticulation de la couche de résine disposée sur le matériau de support en tant qu'au moins un premier paramètre par enregistrement d'au moins un spectre NIR de la couche de résine appliquée sur le matériau de support dans une plage de longueur d'onde comprise entre 500 nm et 2500 nm, de préférence entre 700 nm et 2000 nm, de manière particulièrement préférée entre 900 nm et 1700 nm et particulièrement avantageusement entre 1450 nm et 1550 nm, par l'au moins une tête de multimesure NIR disposée avant la presse, et d'évaluation du spectre NIR enregistré dans l'unité d'évaluation par une comparaison automatisée du spectre NIR enregistré à un modèle d'étalonnage créé pour le paramètre de la couche de résine,
- de détermination du degré de durcissement de la couche de résine disposée sur le matériau de support en tant qu'au moins un deuxième paramètre de la couche de résine disposée sur le matériau de support par enregistrement d'au moins un spectre NIR de la couche de résine appliquée sur le matériau de support dans une plage de longueur d'onde comprise entre 500 nm et 2500 nm, de préférence entre 700 nm et 2000 nm, de manière particulièrement préférée entre 900 nm et 1700 nm et particulièrement avantageusement entre 1450 nm et 1550 nm, par l'au moins une tête de multimesure NIR disposée après la presse et d'évaluation du spectre NIR enregistré dans l'unité d'évaluation par une comparaison automatisée du spectre NIR enregistré à un modèle d'étalonnage créé pour le degré de durcissement de la couche de résine ;
dans lequel le degré de réticulation déterminé avant la presse (valeur réelle du degré de réticulation) est comparé à une valeur de consigne du degré de réticulation, et
dans lequel le degré de durcissement déterminé après la presse (valeur réelle du degré de durcissement) est comparé à une valeur de consigne du degré de durcissement, et
dans lequel, en cas d'écart de la valeur réelle du degré de réticulation et en cas d'écart de la valeur réelle du degré de durcissement par rapport aux valeurs de consigne respectives, les paramètres de fonctionnement de la presse sont automatiquement adaptés par le système de commande, de sorte que la valeur de consigne du degré de réticulation et la valeur de consigne du degré de durcissement sont respectées, et
dans lequel les paramètres de fonctionnement de la presse à commander sont sélectionnés parmi la température de pressage, la pression de pressage et/ou le temps de pressage.

2. Procédé selon la revendication 1, **caractérisé en ce que** les paramètres de fonctionnement de la presse à commander sont sélectionnés parmi la température de pressage et le temps de pressage.

3. Procédé selon l'une quelconque des revendications précédentes, **caractérisé en ce que** le temps de pressage se situe dans une plage comprise entre 6 et 40 secondes, de préférence entre 8 et 36 secondes.

4. Procédé selon l'une quelconque des revendications précédentes, **caractérisé en ce que** la température de pressage en amont de la presse à commander est comprise entre 180 °C et 220 °C, de préférence entre 190 °C et 200 °C.

5. Procédé selon l'une quelconque des revendications précédentes, **caractérisé en ce que** le temps de pressage et la température de pressage à commander sont opposés l'un à l'autre.

6. Procédé selon l'une quelconque des revendications précédentes, **caractérisé en ce que**, en plus du degré de réticulation, les paramètres suivants sont déterminés, en particulier par spectroscopie NIR, avant la presse : teneur en humidité de la couche de résine appliquée et quantité de couche de résine appliquée.

7. Procédé selon l'une quelconque des revendications précédentes, **caractérisé en ce que**, en plus du degré de durcissement, les paramètres suivants sont déterminés, en particulier par spectroscopie NIR, après la presse : pénétration de la résine (ou hauteur de pénétration/quantité de pénétration de la résine) dans au moins un matériau de revêtement poreux disposé sur le matériau de support revêtu de résine.

8. Procédé selon l'une quelconque des revendications précédentes, **caractérisé en ce que** l'au moins une presse est une presse à cycle court (presse KT).

9. Procédé selon l'une quelconque des revendications 1 à 7, **caractérisé en ce que** l'au moins une presse est une presse continue (presse CPL).

10. Procédé selon la revendication 9, **caractérisé en ce que** l'étape de pressage dans la presse (presse CPL) est réalisée à une pression de pressage appliquée comprise entre 50 - 70 kg/cm² et une température comprise entre 150 et 200 °C, de préférence 180 °C, et une vitesse d'application de 5-20 m/min, de préférence 5 à 15 m/min.

11. Procédé selon l'une quelconque des revendications précédentes, **caractérisé en ce que** l'au moins une couche de résine comprend une couche de papier imprégnée de résine, une poudre contenant de la résine ou un liquide contenant de la résine.

12. Procédé selon l'une quelconque des revendications précédentes, **caractérisé en ce que** le matériau de support se présente sous la forme d'une plaque de support, couche de papier ou couche de film.

13. Procédé selon l'une quelconque des revendications précédentes, **caractérisé en ce que** le modèle d'étalonnage appliqué pour les paramètres respectifs à déterminer de la couche de résine est déterminé au moyen d'échantillons de référence comme suit :
- l'enregistrement d'au moins un spectre NIR de plusieurs échantillons de référence avec chacun des valeurs différentes des paramètres souhaités à l'aide d'au moins une tête de multimesure NIR dans une plage de longueur d'onde comprise entre 500 nm et 2500 nm, de préférence entre 700 nm et 2000 nm, de manière particulièrement préférée entre 900 nm et 1700 nm, et particulièrement avantageusement entre 1450 nm et 1550 nm ;
- la détermination des paramètres souhaités des échantillons de référence mesurés par des méthodes non spectroscopiques ;
- l'affectation des paramètres déterminés aux spectres NIR respectivement enregistrés des échantillons de référence mesurés.

14. Ligne de production pour mettre en œuvre un procédé selon l'une quelconque des revendications précédentes comprenant au moins une presse, au moins une première tête de multimesure NIR, qui est disposée en amont de (avant) la presse, et au moins une deuxième tête de multimesure NIR, qui est disposée en aval de (après) la presse, et au moins un système de commande pour la commande de la presse, dans laquelle le système de commande de la presse comprend au moins une unité d'évaluation assistée par ordinateur et une base de données.
